# EUROPEAN PATENT SPECIFICATION

(11) **EP 0 884 002 B1**
(45) Date of publication and mention of the grant of the patent: **09.04.2003**
(21) Application number: 98830326.9
(22) Date of filing: 27.05.1998
(51) Int. Cl.: A23L 1/212

(54) **Method for increasing the consistency of plant products in the form of pieces, in particular for diced tomato,**
Verfahren zur Erhöhung der Konsistenz von stückigen Pflanzenprodukten, insbesondere stückigen Tomaten
Méthode pour augmenter la consistance de produits végétaux sous forme de morceaux, en particulier morceaux de tomates

(30) Priority: 06.06.1997 IT PR970034
(43) Date of publication of application: 16.12.1998
(73) Proprietor: SIG Manzini S.p.A., 43100 Parma (IT)
(72) Inventor: Sommi, Franco, 43100 Parma (IT); Paciello, Gerardo, 85010 Pignola (Potenza) (IT)
(74) Representative: Gotra, Stefano

(56) References cited:
- WO-A-96/11588
- WO-A-97/38591
- US-A- 4 504 504
- J. D. FLOROS ET. AL.: "Optimization of a Diced Tomato Calcification Process" JOURNAL OF FOOD SCIENCE, vol. 57, no. 5, September 1992 (1992-09), pages 1144-1148, XP000674326 Chicago, illinois, usa

## Description

The present invention relates to a method for increasing the consistency of plant products in the form of pieces, in particular for diced tomato.

Maintaining the integrity of the tissue and the consistency are important parameters for the quality of tinned tomatoes in the form of pieces.

A widespread method for making tomato-derived products (peeled tomato, tomato pulp or diced tomato) more resistant to thermomechanical stresses is the use of calcium salts (generally calcium chloride). If the process is performed efficiently, there is an improvement in the quality of the product in terms of a better drip-free weight and increase in consistency. The concentration of the calcium ions, the pH, the molecular weight and the degree of esterification of the pectic substances are the factors which influence the process most.

Italian Industrial Patent Application No. M195A000334 discloses a method for the production of tinned fruit and vegetables in the form of high-consistency pieces in which the plant product is treated with a calcium-complexing chemical composition comprising pectin methyl esterase (PME) and a calcium salt.

In particular the calcium-complexing chemical composition is a solution containing 0.1 M - 0.2 M of CaCl₂ and 0.1 - 10 U/ml of PME.

Said solution also comprises a salt of an alkaline metal, in a quantity ranging from 0.05 M to 0.2 M, suitable for increasing the ionic force of the solution itself.

The method is performed preferably after cutting the product and prior to the stage of acidification and stabilization by means of heat.

The PME used is extracted from the refining waste originating from the line itself for preparation of juices and concentrates.

The abovementioned calcium-complexing method is performed by means of immersion of the product in a calcium-complexing bath and subsequent extraction (it is a batch-type, i.e. non-continuous method).

In the aforementioned document no reference is made to possible influences of the temperature on the method and a temperature of 25°C, i.e. basically room temperature, is used.

In fact, it is a generally widely held view that the temperature is not a relevant parameter for the purposes of calcium-complexing.

This theory is also backed, for example, by the "Journal of Food Sciences", Volume 57, No. 5, 1992), in which, on page 1144 et seq., it is repeatedly stated that the temperature is not an important factor for the calcium-complexing method since it does not modify significantly the outcome of the process.

The Applicant, after careful studies, however, has surprisingly found that the temperature significantly influences the process.

The essential object of the present invention is therefore that of increasing the consistency of plant products in the form of pieces, and in particular tomato-derived products, by means of a calcium-complexing process which is performed in the heat (i.e. not at room temperature), at a particular temperature which is not high enough to cause degradation of the final product.

A further object is that of processing the product continuously.

Said objects are fully achieved by the method which forms the subject of the present invention and which is characterized by the contents of the claims below and in particular by the fact that the processing of the plant product with a calcium-complexing mixture comprising PME and a calcium salt is performed in the heat by means of mixing of the plant product with a calcium-complexing mixture having a temperature of between 60°C and 100°C and preferably between 70° and 90°C.

In a particular manner, excellent results have been obtained at a temperature of 70°-85°C.

Preferably the calcium-complexing mixture is obtained directly from juice of the plant product to which citric acid and calcium chloride are added, and the mixture is then heated to the desired temperature (60°-100°C).

The juice may be obtained from a draining stage after mixing of the plant product with the calcium-complexing mixture.

In order to increase the consistency, calcium salts derived from organic acids and falling within the category of "α-, β- and γ-hydroxyacids" (such as citric, tartaric, lactic, glycolic, α-hydroxybutyric, mandelic and malic acids) or carboxylic acids (such as acetic acid and formic acid) are preferably used.

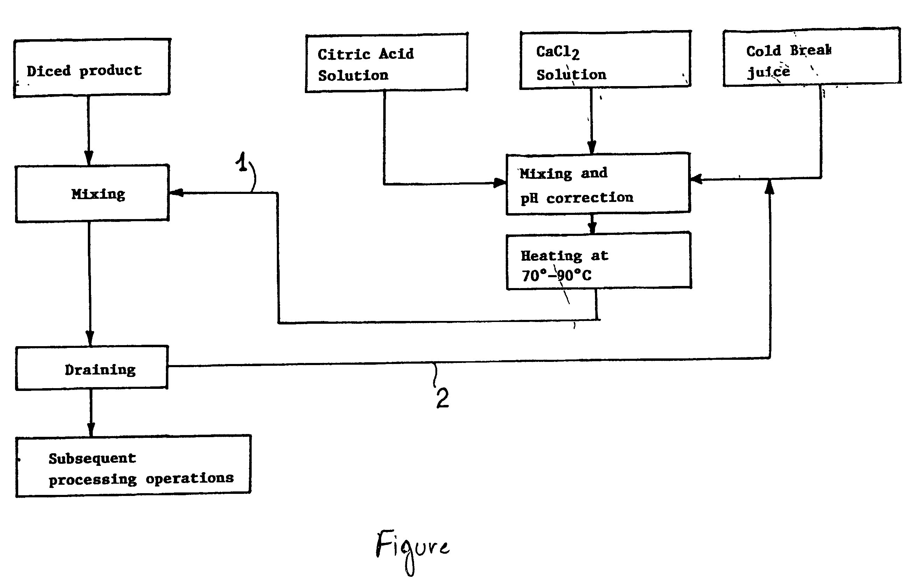

These and other characteristic features will emerge more clearly from the following description of a preferred embodiment illustrated, purely by way of an example, in the accompanying illustrative plate, in which the sole figure illustrates schematically the method.

With reference to the method schematically shown in the Figure, in order to understand better the action of the temperature, it is important to emphasize that the pectic substances provide plant products with structure and in particular that the following are present:
pectic acids: polymers of galacturonic acid partially esterified with -CH₃;
pectates: acid or neutral salts of the pectic acids;
pectinates: acid or neutral salts of pectin acids;
protopectin: water-insoluble substance which, owing to the hydrolytic enzyme action, develops the various pectic forms.

The above represents 15-20% of the total solids.

The three-dimensional reticular structure in the plant products, such as tomato juice, is generated by the following bonds between the chains:
hydrogen bond between carbonyl groups: -COOH---OHOC-;
hydroxy bonds: -OH--OHO-R-OHO;
methyl bond: -O-CH₂-O-.

The numerous linkage points between the various macromolecular chains are responsible for both the consistency and the insolubility of the product.

In particular, from an examination of the bond -OH and -O-CH₃, it can be noted that both the polarisability and the ion mobility of the hydroxyl group is higher than that of the etheromethyl group and therefore that the possibility of forming calcium bonds is very high for those polymers which have many non-esterified groups. This is also true owing to the smaller steric bulk of the -OH group compared to the -OCH₃ group.

Therefore, if a diced piece of tomato which has previously undergone de-esterification - even partial - is immersed in a calcium chloride solution, the complexing effect (formation of -O-Ca-O- bonds) is intensified.

A method for obtaining several OH groups is that of allowing the polymethylesterase enzyme PME to react.

There are two ways of achieving this result: either the diced piece is immersed in a solution of PME (as taught by the abovementioned patent application) or the enzyme is allowed to react, having been freed naturally during breakage, using in an original manner the juice obtained according to the method known as "Cold Break".

In both cases it is necessary to take into account a negative effect due to the action of the PME which, forming pectic and pectinic acids, creates the conditions for allowing other enzymes to react, in particular, polygalacturonase PG which, breaking the oxygen bond inside the polygalacturonic molecule, depolymerizes the pectin and reduces the consistency of the product.

These considerations are valid when the pectolytic activities are high and the reaction times are short, or when the permanence times are high also with very low activities.

When both these values are low, the structural damage due to the action of the enzyme is negligible compared to the increase in consistency due to the complexing action of the calcium.

We consider that the action of the temperature, on the one hand, increases significantly the solubility of the calcium chloride (in fact the dissolution mechanism is an endothermic chemical reaction and, in accordance with Vant'Hoffs law, an increase in temperature increases the equilibrium constant and therefore the available concentration of calcium ions) and, on the other hand, facilitates the methyl de-esterification mechanism with a consequent increase in concentration of available calcium-complexing sites.

A limitation consists in the enzymatic inactivation temperature of PME (95°C for 30 seconds) which, once reached, drastically reduces the de-esterification process and hence efficient calcium-complexing.

The carrying out of the calcium-complexing process in the cold, during a first stage, certainly facilitates the mechanical strength of the diced piece on account of the deesterifying action of the enzyme PME which increases the binding points for the calcium salt, although as time progresses, the oxygen bond breaking process in the molecules of the pectins due to the enzyme PG becomes the kinematically controlling step, adversely affecting the strength of the diced piece. A process in the heat has the function of lessening this second phenomenon by means of, in any case, a reduction in the enzymatic activity, even though not to high levels as would be possible using Hot Break juice (i.e. juice which has been raised to a temperature close to 100°).

The action of the heat is more significant in the case where Cold Break juice is used instead of Hot Break juice, owing to the presence of the enzyme PME which is free in the first product and capable of inactivation with the heat.

Therefore, despite the fact that the teachings of the prior art lead one to conclude that the influence of the temperature is negligible, the Applicant has instead reached the conclusion that the use of a particular temperature has a considerable and surprising effect on the calcium-complexing process.

The process is performed in accordance with the steps shown in the accompanying flow diagram or figure. The diced product, which is obtained from previous dicing operations, at about 30°C is supplied into the mixing section; tomato juice is conveyed into this same section (path 1 in Figure). This juice, which is obtained either with the Cold Break technique (preferably) or the Hot Break technique, has, added to it beforehand, citric acid (or citric acid solution) for correction of the pH and calcium chloride solution and is then reheated to a suitable temperature (normally from 70° to 90°, in exceptional cases from 60° to 100°C) below the enzymatic inactivation temperature if Cold Break juice is used. The best results are obtained with temperatures of between 70°C and 85°C.

From the following draining stage the juice is conveyed (path indicated by 2 in the Figure) into a tank where citric acid and calcium chloride are added and is then recycled, after reheating.

The juice is then used as a means for heating the diced product and as a source of calcium chloride.

This heat treatment allows better draining of the diced tomato product to be obtained since it releases serum, which, owing to the greater quality of the finished product, is desirably separated and eliminated since it would cause the undesired effect of syneresis in the finished product.

The mixing section is composed of:
- trough or receptacle for pre-treating the diced product by means of recycled juice;
- a screw for feeding and delicate mixing of the product;
- drive system with a variable-speed motor for the screw positioned inside the trough.

Another important novelty of the present invention is that of using (when possible), as mixing juice, a product obtained according to the Cold Break method, characterized by the presence of pectolytic enzyme PME which could also result in a reduction in the calcium chloride content, for the same consistency, with consequent improvements in the quality of the product.

Moreover, PME previously extracted with chemical methods is not added (as in the abovementioned patent application), but instead the enzyme which is naturally present in the tomato juice is exploited, thus avoiding having to add extraneous substances to the finished product such as the residue of chemical enzyme-extraction processes.

The method is performed continuously.

In order to increase the consistency, calcium chloride is normally used, but in order to avoid possible corrosive effects attributable to the presence of chlorine, the Applicant has developed the use of a series of calcium salts derived from organic acids, which fall within the two following categories:
- "α-, β- and γ-hydroxyacids" (the most important of which are citric acid, tartaric acid, lactic acid, glycolic acid, α-hydroxybutyric acid, mandelic acid and malic acid), in which α-hydroxyacid, β-hydroxyacid or γ-hydroxyacid are differentiated respectively depending on whether the -OH group is bonded to the first, second or third carbon atom;
- carboxylic acids, preferably non-aromatic, such as acetic acid and formic acid. With the calcium salts of α-, β- and γ-hydroxyacids or carboxylic acids the Applicant has obtained significant results involving an increase in the consistency without the possible drawbacks due to the presence of chlorine.

## Claims

1. Method for increasing the consistency of plant products in the form of pieces, in particular for diced tomato, of the type which envisages treating the plant product with a calcium-complexing mixture comprising pectin methyl esterase, so called PME and a calcium salt, **characterized in that** said treatment is performed continuously and in the heat by means of mixing of the plant product with an external calcium-complexing mixture having a temperature of between 60°C and 100°C, wherein PME is natural PME (i.e. not extracted with chemical methods).

2. Method according to Claim 1, in which the calcium-complexing mixture is obtained directly from juice of the plant product to which citric acid and calcium chloride are added, and the mixture is then heated.

3. Method according to Claim 2, in which the juice of the plant product used in the mixture is obtained from a draining stage following mixing of the plant product with the calcium-complexing mixture.

4. Method according to Claim 1, in which the calcium-complexing mixture has a temperature of between 70°C and 90°C.

5. Method according to Claim 1, in which the calcium-complexing mixture has a temperature of between 70°C and 85°C.

6. Method according to Claim 1, in which the calcium salt is a salt derived from organic acids called α-, β- and γ-hydroxyacids.

7. Method according to Claim 1, in which the calcium salt is a salt derived from organic acids called carboxylic acids.

8. Method according to Claim 6, in which the α-, β- and γ-hydroxyacids used belong to the following group: citric acid, tartaric acid, lactic acid, glycolic acid, α-hydroxybutyric acid, mandelic acid and malic acid.

9. Method according to Claim 7, in which the carboxylic acids used are preferably formic acid or acetic acid.

## Patentansprüche

1. Verfahren zur Erhöhung der Konsistenz von stückigen Pflanzenprodukten, insbesondere stückigen Tomaten, bei dem das Pflanzenprodukt mit einem Kalziumkomplex-Gemisch behandelt wird, das Pektin-Methyl-Esterase -auch als PME bezeichnet- und Kalziumsalz enthält, **dadurch gekennzeichnet, dass** diese Behandlung ständig unter Wärmeeinwirkung durchgeführt wird, indem das Pflanzenprodukt mit einem äusseren eine Temperatur von 60°C bis 100°C aufweisenden Kalziumkomplex-Gemisch vermischt wird, wobei es sich bei der PME um natürliche (das heisst nicht mithilfe chemischer Verfahren gewonnene) PME handelt.

2. Verfahren nach Anspruch 1, bei dem das Kalziumkomplex-Gemisch direkt aus dem Saft des Pflanzenproduktes erhalten wird, dem Zitronensäure und Kalziumchlorid beigemischt wird, woraufhin das Gemisch erwärmt wird.

3. Verfahren nach Anspruch 2, bei dem der in dem Gemisch benutzte Saft durch Entwässerung erhalten wird, die nach dem Mischen des Pflanzenproduktes mit dem Kalziumkomplex-Gemisch erfolgt.

4. Verfahren nach Anspruch 1, bei dem das Kalziumkomplex-Gemisch eine Temperatur von 70°C bis 90°C aufweist.

5. Verfahren nach Anspruch 1, bei dem das Kalziumkomplex-Gemisch eine Temperatur von 70°C bis 85°C hat.

6. Verfahren nach Anspurch 1, bei dem das Kalziumsalz ein aus organischen, sogenannten α-, β-, γ-Hydroxysäuren gewonnenes Salz ist.

7. Verfahren nach Anspruch 1, bei dem das Kalziumsalz aus organischen, sogenannten Karboxylsäuren gewonnen wird.

8. Verfahren nach Anspruch 6, bei dem die verwendeten α-, β-, γ-Hydroxysäuren folgenden Gruppen angehören: Zitronensäure, Weinsteinsäure, Milchsäure, Glykolsäure, α-Hydroxybuttersäure, Mandelsäure und Apfelsäure.

9. Verfahren nach Anspruch 7, bei dem die verwendeten Karboxylsäuren vorzugsweise Ameisenoder Essigsäure sind.

## Revendications

1. Méthode pour augmenter la consistance de produits végétaux sous forme de morceaux, en particulier de morceaux de tomates, du type envisageant le traitement du produit végétal avec un complexe à base de calcium comprenant du méthylpectineestérase, dit PME, et un sel de calcium, **caractérisée en ce que** ledit traitement est réalisé en continu et à chaud au moyen du mélange du produit végétal avec un complexe externe à base de calcium ayant une température de 60°C à 100°C, dans laquelle le PME est naturel (c'est à dire qu'il n'est pas extrait avec des méthodes chimiques).

2. Méthode selon la revendication 1, dans laquelle le complexe à base de calcium est obtenu directement du jus du produit végétal auquel on ajoute de l'acide citrique et du chlorure de calcium, le complexe étant alors réchauffé.

3. Méthode selon la revendication 2, dans laquelle le jus du produit végétal utilisé dans la mixture est obtenu lors d'une phase d'égouttage suivant le mélange du produit végétal avec le complexe à base de calcium.

4. Méthode selon la revendication 1, dans laquelle le complexe à base de calcium a une température qui se situe entre 70°C et 90°C.

5. Méthode selon la revendication 1, dans laquelle le complexe à base de calcium a une température qui se situe entre 70°C et 85°C.

6. Méthode selon la revendication 1, dans laquelle le sel de calcium est dérivé d'acides organiques appelés acides hydroxydes α, β et γ.

7. Méthode selon la revendication 1, dans laquelle le sel de calcium est dérivé d'acides organiques appelés acides carboxyliques.

8. Méthode selon la revendication 6, dans laquelle les acides hydroxydes α, β et γ utilisés appartiennent au groupe suivant: acide citrique, acide tartrique, acide lactique, acide glycolique, acide hydroxybutyrique α, acide mandelique et acide malique.

9. Méthode selon la revendication 7, dans laquelle les acides carboxyliques utilisés sont l'acide formique ou l'acide acétique.
